# EUROPÄISCHE PATENTSCHRIFT

(11) **EP 2 814 682 B1**
(45) Veröffentlichungstag und Bekanntmachung des Hinweises auf die Patenterteilung: **21.03.2018**
(21) Anmeldenummer: 12809642.7
(22) Anmeldetag: 03.12.2012
(51) Int. Cl.: B60K 1/02, B60K 1/04, B60K 17/06, B60K 1/00, B60K 17/04, B62K 11/00, H02P 5/00, H02K 7/00, H02K 9/00, H02K 16/00

(54) **ELEKTROANTRIEB, FAHRZEUG MIT EINEM ELEKTROANTRIEB SOWIE VERFAHREN ZUM BETREIBEN EINES ELEKTROANTRIEBS**
ELECTRIC DRIVE, VEHICLE WITH ELECTRIC DRIVE AND METHOD FOR OPERATING AN ELECTRIC DRIVE
ENTRAÎNEMENT ÉLECTRIQUE, VÉHICULE POURVU D'UN ENTRAÎNEMENT ÉLECTRIQUE, ET PROCÉDÉ PERMETTANT DE FAIRE FONCTIONNER UN ENTRAÎNEMENT ÉLECTRIQUE

(30) Priorität: 17.02.2012 DE 102012202432
(43) Veröffentlichungstag der Anmeldung: 24.12.2014
(73) Patentinhaber: Lisa Dräxlmaier GmbH, 84137 Vilsbiburg (DE)
(72) Erfinder: GAUBATZ, Karl-Heinz, 85999 Parsdorf (DE); BOCK, Thomas, 82041 Oberhaching (DE)
(86) Internationale Anmeldenummer: PCT/EP2012/074237
(87) Internationale Veröffentlichungsnummer: WO 2013/120556

(56) Entgegenhaltungen:
- EP-A2- 0 937 600
- WO-A1-2011/108403
- WO-A1-2012/059962
- DE-A1-102010 025 457
- US-A- 5 253 724
- US-B2- 7 249 644

## Beschreibung

### Technisches Gebiet

Die vorliegende Erfindung betrifft einen Elektroantrieb gemäß dem Oberbegriff des Patentanspruches 1 sowie ein Fahrzeug mit einem derartigen Elektroantrieb.

### Stand der Technik

Ein Elektroantrieb gemäß dem Oberbegriff des Patentanspruches 1 ist aus der DE 10 2010 025 457 A1 bekannt. Zum technischen Hintergrund der Erfindung zählen die EP 937 600 A2, US 5 253 724 A, US 7 249 644 B2 sowie die WO 2011/108403 A1.

Derzeit werden weltweit bereits mehrere Millionen Zweiräder mit Elektroantrieb verkauft. Ausgehend von Fahrrädern mit Elektroantrieb halten Elektroantriebe zunehmend auch im Scooterbereich bzw. bei "Motorrädern" Einzug.

### Beschreibung der Erfindung

Aufgabe der Erfindung ist es, einen Elektroantrieb zu schaffen, der insbesondere für einen Einsatz im Motorradbereich geeignet ist.

Diese Aufgabe wird durch einen Elektroantrieb mit den Merkmalen des Patentanspruchs 1 sowie ein Fahrzeug mit einem derartigen Elektroantrieb gemäß Patentanspruch 15 gelöst. Vorteilhafte Ausgestaltungen und Weiterbildungen der Erfindung sind den Unteransprüchen zu entnehmen.

Der Grundgedanke der Erfindung besteht in einer "elektrischen Antriebsanordnung" mit einer geradzahligen Anzahl elektrischer Maschinen (z.B. mit zwei elektrischen Maschinen),
wobei die Anordnung der elektrischen Maschinen relativ zueinander an das Konzept der Zylinderanordnung eines Boxer-Verbrennungsmotors angelehnt ist ("Elektro-Boxer"). Dies bedeutet, dass die elektrischen Maschinen im Wesentlichen "in einer horizontalen Ebene", d.h. flach liegend angeordnet sind. Die Läuferwellen der elektrischen Maschinen sind vorzugsweise im Wesentlichen oder exakt senkrecht in Bezug auf eine Mittellängsebene der Antriebsanordnung bzw. des Elektroantriebs, wobei eine elektrische Maschine auf der einen Seite der Mittellängsebene und eine zweite elektrische Maschine auf der gegenüberliegenden Seite der Mittellängsebene angeordnet ist. Die mindestens zwei elektrischen Maschinen stehen seitlich von dem Elektroantrieb ab, vergleichbar mit den Zylindern eines Boxermotors.

Vorzugsweise sind die elektrischen Maschinen so angeordnet, dass die Läuferwellen eines Paars elektrischer Maschinen koaxial zueinander sind. Die beiden elektrischen Maschinen können im Wesentlichen spiegel-symmetrisch in Bezug auf die Mittellängsebene ausgebildet und angeordnet sein. Die elektrischen Maschinen sind aber nicht unmittelbar aneinander, sondern in Längsrichtung ihrer Läuferwellen "beabstandet" voneinander angeordnet, worauf im Folgenden noch näher eingegangen wird.

Ein derartiger Elektroantrieb weist eine Getriebeanordnung mit einem ersten und einem zweiten Antriebselement sowie mit einem Abtriebselement auf. Der Begriff "Getriebeanordnung" ist in diesem Zusammenhang äußerst breit auszulegen. Gemeint ist ganz allgemein eine "Anordnung" die es ermöglicht,
a) Drehmoment von der ersten elektrischen Maschine auf das Abtriebselement und/oder
b) von der zweiten elektrischen Maschine auf das Abtriebselement und/oder
c) gleichzeitig von beiden elektrischen Maschinen auf das Abtriebselement zu übertragen.

Auf einer Seite der Getriebeanordnung ist die mindestens eine erste elektrische Maschine angeordnet, die drehmomentübertragend mit dem ersten Antriebselement koppelbar oder gekoppelt ist. Auf einer der ersten Seite gegenüberliegenden zweiten Seite der Getriebeanordnung ist die mindestens eine zweite elektrische Maschine angeordnet, die drehmomentübertragend mit dem zweiten Antriebselement koppelbar oder gekoppelt ist.

Ein derartiger "Elektro-Boxer", der in seiner Bauform der Bauform eines Boxer-Verbrennungsmotor, wie er z. B. von BMW Motorrädern bekannt ist, ähnelt, weist zahlreiche Vorteile auf. Bei einem Einbau in ein Zweirad ergibt sich aufgrund der räumlichen Anordnung der elektrischen Maschinen ein vergleichsweise niedriger Fahrzeugschwerpunkt, was sich sehr günstig auf das Fahrverhalten auswirkt.

Die links und rechts seitlich abstehenden elektrischen Maschinen befinden sich, ähnlich wie dies bei BMW-Motorrädern mit Boxermotor der Fall ist, vorderhalb der Füße bzw. Schienbeine des Fahrers. Die Füße bzw. Schienbeine des Fahrers sind dadurch bei einem eventuellen Unfall wesentlich besser vor Verletzungen geschützt als dies bei Motorrädern mit herkömmlichen (nicht Boxer-Motoren) der Fall ist.

Ein elektrischer Energiespeicher, welcher die elektrischen Maschinen mit Strom versorgt, ist unterhalb oder oberhalb der Getriebeanordnung angeordnet. Die Getriebeanordnung ist unmittelbar an ein Gehäuse des elektrischen Energiespeichers angeflanscht.

Die zwischen den beiden elektrischen Maschinen vorgesehene Getriebeanordnung ist so konzipiert, dass in Betriebszuständen, in denen die auf beiden Seiten befindlichen elektrischen Maschinen gleichzeitig antreiben, die beiden Antriebselemente in einander entgegengesetzte Richtungen drehen. Dies hat den Vorteil, dass sich bei Kurvenfahrten die durch die beiden elektrischen Antriebe hervorgerufenen Kreiselmomente teilweise oder ganz gegenseitig aufheben.

Es kann vorgesehen sein, dass mindestens einer der beiden auf den beiden Seiten der Getriebeanordnung vorgesehenen elektrischen Antriebe über einen Freilauf mit dem zugeordneten Antriebselement der Getriebeanordnung koppelbar oder gekoppelt ist. Dies hat den Vorteil, dass, je nach Leistungsbedarf, mit dem auf der linken Seite oder mit dem auf der rechten Seite angeordneten elektrischen Antrieb angetrieben werden kann, oder auch gleichzeitig mit beiden elektrischen Antrieben.

Es sei ausdrücklich darauf hingewiesen, dass auf der ersten und/oder der zweiten Seite der Getriebeanordnung mehrere elektrische Maschinen, z. B., jeweils zwei elektrische Maschinen angeordnet sein können. Es kann vorgesehen sein, dass die auf einer Seite der Getriebeanordnung vorgesehenen elektrischen Maschinen jeweils über eine Kopplungseinrichtung, z. B. über Zugmittelgetriebe mechanisch miteinander gemeinsam mit dem zugeordneten ersten oder zweiten Antriebselement gekoppelt sind.

Die Kraftübertragung von der Getriebeanordnung bzw. vom Antriebselement der Getriebeanordnung auf ein Antriebsrad eines Fahrzeugs kann z. B. über ein Zahnradgetriebe, ein Zugmittelgetriebe, wie z. B. einen Kettentrieb oder einen Riementrieb, über einen Kardan oder über andere Drehmomentübertragungseinrichtungen erfolgen.

Hinsichtlich der Kühlung der elektrischen Maschinen kann vorgesehen sein, dass diese an einen Flüssigkeitskühlkreislauf angeschlossen sind. Von den elektrischen Maschinen abgegebene Wärme wird dann über ein flüssiges Kühlmittel an einen luftdurchströmten Kühler und von diesem an die Umgebungsluft abgegeben.

Alternativ oder zusätzlich können die elektrischen Maschinen thermisch mit Kühlrippen verbunden sein. Die Kühlrippen können, ähnlich wie dies bei herkömmlichen Boxer-Verbrennungsmotoren der Fall ist, außen an den seitlich abstehenden Gehäusen der elektrischen Maschinen angeordnet sein. Vorzugsweise sind die Kühlrippen in Längsrichtung des Elektroantriebs, d. h. senkrecht zu den Drehachsen der elektrischen Maschinen bzw. parallel zu der oben erwähnten Mittellängsebene angeordnet, so dass bei einem Einbau in ein Zweirad der Fahrtwind an den Kühlrippen entlang streichen kann. Nach einer Weiterbildung der Erfindung ist vorgesehen, dass das erste Antriebselement über eine erste Übersetzung mit dem Abtriebselement und das zweite Antriebselement über eine sich von der ersten Übersetzung unterscheidende zweite Übersetzung mit dem Antriebselement gekoppelt ist. Die erste und/oder die zweite Übersetzung kann jeweils durch eine schaltbare Übersetzungseinrichtung oder durch eine feste, nicht schaltbare Übersetzungseinrichtung gebildet sein.

Unterschiedliche Übersetzungen haben den Vorteil, dass die auf der einen Seite angeordnete elektrische Maschine bzw. Maschinen in einem ersten Betriebsbereich (Drehzahl-/Drehmomentbereich) und die auf der anderen Seite angeordnete elektrische Maschine bzw. Maschinen in einem anderen Betriebsbereich (Drehzahl/Drehmomentbereich) eingesetzt werden können. Der Elektroantrieb kann auf diese Weise in einem weiten Betriebsbereich in einem günstigen Wirkungsgradbereich betrieben werden.

Es kann vorgesehen sein, dass einzelne oder sämtliche der vorgesehenen elektrischen Maschinen in einem "Niedervoltbereich" betrieben werden, was bedeutet, dass die maximale Betriebsspannung kleiner als eine vorgegebene Betriebsspannung von z. B. 60 Volt ist. "Niedervoltantriebe" haben den Vorteil, dass der technische Aufwand, der für die Betriebssicherheit betrieben werden muss, und der Schulungsaufwand für Wartungspersonal wesentlich geringer ist, als bei "Hochvoltantrieben".

Alternativ dazu kann vorgesehen sein, dass einzelne oder alle elektrische Maschinen in einem Hochvoltbereich betrieben werden, was bedeutet, dass die maximale Betriebsspannung, bei der die elektrischen Maschinen arbeiten, oberhalb einer vorgegebenen Spannungsgrenze von z. B. 60 Volt liegen.

Ferner kann vorgesehen sein, dass die maximale Leistung einer jeden der elektrischen Maschinen kleiner als eine vorgegebene Leistung von z.B. 25 KW oder 20 KW ist. Elektrische Maschinen, welche eine Leistung von 20 bzw. 25 KW nicht überschreiten, weisen einen deutlich besseren Wirkungsgrad auf als leistungsstärkere Maschinen. Die Leistung des gesamten Elektroantriebs kann durch die Verwendung mehrerer derartiger elektrischer Maschinen beliebig bzw. bedarfsgereicht skaliert werden.

## Patentansprüche

1. Elektroantrieb, insbesondere für Fahrzeuge, mit mindestens einer ersten und mindestens einer zweiten elektrischen Maschine, wobei'
• die elektrischen Maschinen relativ zueinander vergleichbar mit den Zylindern eines Boxer-Verbrennungsmotors angeordnet sind,
• eine Getriebeanordnung vorgesehen ist, die ein erstes und ein zweites Antriebselement sowie ein Abtriebselement aufweist,
• die mindestens eine erste elektrische Maschine auf einer ersten Seite der Getriebeanordnung angeordnet und drehmomentübertragend mit dem ersten Antriebselement koppelbar oder gekoppelt ist und
• die mindestens eine zweite elektrische Maschine auf einer der ersten Seite gegenüberliegenden zweiten Seite der Getriebeanordnung angeordnet und drehmomentübertragend mit dem zweiten Antriebselement koppelbar oder gekoppelt ist, **dadurch gekennzeichnet, dass**
• die Getriebeanordnung so konzipiert ist, dass bei einer das Abtriebselement antreibenden Drehmomentübertragung die beiden Antriebselemente in einander entgegengesetzte Richtungen drehen,
• ein elektrischer Energiespeicher vorgesehen ist, der unterhalb oder oberhalb der Getriebeanordnung angeordnet ist, wobei
• die Getriebeanordnung unmittelbar an ein Gehäuse des elektrischen Energiespeichers angeflanscht ist.

2. Elektroantrieb nach Anspruch 1, **dadurch gekennzeichnet, dass** die mindestens zwei elektrischen Maschinen auf einander gegenüberliegenden Seiten der Getriebeanordnung von dieser abstehen.

3. Elektroantrieb nach einem der Ansprüche 1 bis 2, **dadurch gekennzeichnet, dass** die erste und die zweite elektrische Maschine jeweils eine Motorwelle aufweisen und so angeordnet sind, dass die Motorwellen exakt oder im Wesentlichen koaxial relativ zueinander sind.

4. Elektroantrieb nach einem der Ansprüche 1 bis 3, **dadurch gekennzeichnet, dass** mindestens eine der elektrischen Maschinen über einen Freilauf mit dem zugeordneten Antriebselement koppelbar oder gekoppelt ist.

5. Elektroantrieb nach einem der Ansprüche 1 bis 4, **dadurch gekennzeichnet, dass** auf der ersten und/oder der zweiten Seite der Getriebeanordnung mindestens zwei elektrische Maschinen angeordnet sind, die über eine Kopplungseinrichtung miteinander und mit dem zugeordneten ersten oder zweiten Antriebselement gekoppelt sind.

6. Elektroantrieb nach Anspruch 5, **dadurch gekennzeichnet, dass** die Kopplungseinrichtung durch ein Zugmittelgetriebe gebildet ist.

7. Elektroantrieb nach einem der Ansprüche 1 bis 6, **dadurch gekennzeichnet, dass** jede der beiden elektrischen Maschinen luftgekühlt ist, wobei jeder der elektrischen Maschinen Kühlrippen zugeordnet sind.

8. Elektroantrieb nach einem der Ansprüche 1 bis 6, **dadurch gekennzeichnet, dass** die elektrischen Maschinen an einen Flüssigkeitskühlkreislauf angeschlossen sind.

9. Elektroantrieb nach einem der Ansprüche 1 bis 8, **dadurch gekennzeichnet, dass** das erste Antriebselement über eine erste Übersetzung mit dem Abtriebselement und das zweite Antriebselement über eine sich von der ersten Übersetzung unterscheidende zweite Übersetzung mit dem Abtriebselement gekoppelt ist.

10. Elektroantrieb nach Anspruch 9, **dadurch gekennzeichnet, dass** die erste und/ oder die zweite Übersetzung durch eine schaltbare Übersetzungseinrichtung gebildet ist.

11. Elektroantrieb nach Anspruch 9, **dadurch gekennzeichnet, dass** die erste und/oder die zweite Übersetzung durch eine nicht schaltbare Übersetzungseinrichtung gebildet ist.

12. Elektroantrieb nach einem der Ansprüche 1 bis 11, **dadurch gekennzeichnet, dass** mindestens eine der elektrischen Maschinen mit einer Betriebsspannung arbeitet, die kleiner oder höchstens gleich 60 Volt ist.

13. Elektroantrieb nach einem der Ansprüche 1 bis 11, **dadurch gekennzeichnet, dass** mindestens eine der elektrischen Maschinen mit einer maximalen Betriebsspannung arbeitet, die größer als 60 Volt ist.

14. Elektroantrieb nach einem der Ansprüche 1 bis 13, **dadurch gekennzeichnet, dass** die maximale Leistung einer jeden der elektrischen Maschinen kleiner als 25 KW, insbesondere kleiner als 20 KW, ist.

15. Fahrzeug, mit einem Elektroantrieb nach einem der Ansprüche 1 bis 14.

16. Fahrzeug nach Anspruch 15, **dadurch gekennzeichnet, dass** das Fahrzeug ein Zweirad ist.

17. Fahrzeug nach Anspruch 16, **dadurch gekennzeichnet, dass** der Elektroantrieb so in das Zweirad eingebaut ist, dass die Elektromaschinen links bzw. rechts von dem Zweirad abstehen.

## Claims

1. Electric drive, in particular for vehicles, having at least a first and at least a second electric machine, wherein
• the electric machines are arranged in relation to one another in a way which is comparable to the cylinders of a boxer internal combustion engine,
• a transmission arrangement is provided which has a first and a second drive element and an output element,
• the at least one first electric machine is arranged on a first side of the transmission arrangement and can be coupled or is coupled in a torque-transmitting fashion to the first drive element, and
• the at least one second electric machine is arranged on a second side of the transmission arrangement lying opposite the first side and can be coupled or is coupled in a torque-transmitting fashion to the second drive element,
**characterized in that**
• the transmission arrangement is conceived in such a way that during a torque transmission which drives the output element the two drive elements rotate in opposite directions to one another,
• an electric energy store is provided which is arranged underneath or above the transmission arrangement, wherein
• the transmission arrangement is connected by flanges directly to a housing of the electric energy store.

2. Electric drive according to Claim 1, **characterized in that** the at least two electric machines protrude from the transmission arrangement on opposite sides to one another of the latter.

3. Electric drive according to one of Claims 1 to 2, **characterized in that** the first and the second electric machine each have a motor shaft and are arranged in such a way that the motor shafts are precisely or essentially coaxial in relation to one another.

4. Electric drive according to one of Claims 1 to 3, **characterized in that** at least one of the electric machines can be coupled or is coupled to the assigned drive element via a freewheel.

5. Electric drive according to one of Claims 1 to 4, **characterized in that** at least two electric machines which are coupled to one another via a coupling device and to the assigned first or second drive element are arranged on the first and/or the second side of the transmission arrangement.

6. Electric drive according to Claim 5, **characterized in that** the coupling device is formed by a traction drive.

7. Electric drive according to one of Claims 1 to 6, **characterized in that** each of the two electric machines is air-cooled, wherein each of the electric machines are assigned to cooling fins.

8. Electric drive according to one of Claims 1 to 6, **characterized in that** the electric machines are connected to a liquid cooling circuit.

9. Electric drive according to one of Claims 1 to 8, **characterized in that** the first drive element is coupled to the output element by means of a first transmission ratio, and the second drive element is coupled to the output element by means of a second transmission ratio which differs from the first transmission ratio.

10. Electric drive according to Claim 9, **characterized in that** the first and/or the second transmission ratio are/is formed by a shiftable transmission device.

11. Electric drive according to Claim 9, **characterized in that** the first and/or the second transmission ratio are/is formed by a non-shiftable transmission device.

12. Electric drive according to one of Claims 1 to 11, **characterized in that** at least one of the electric machines operates with an operating voltage which is less than or at maximum equal to 60 volts.

13. Electric drive according to one of Claims 1 to 11, **characterized in that** at least one of the electric machines operates with a maximum operating voltage which is higher than 60 volts.

14. Electric drive according to one of Claims 1 to 13, **characterized in that** the maximum power of each of the electric machines is less than 25 KW, in particular less than 20 KW.

15. Vehicle having an electric drive according to one of Claims 1 to 14.

16. Vehicle according to Claim 15, **characterized in that** the vehicle is a two-wheeled vehicle.

17. Vehicle according to Claim 16, **characterized in that** the electric drive is installed in the two-wheeled vehicle in such a way that the electric machines protrude from the two-wheeled vehicle on the left and on the right.

## Revendications

1. Groupe propulseur électrique, notamment pour véhicules automobiles, comprenant au moins une première et au moins une deuxième machine électrique,
* les machines électriques étant disposées les unes par rapport aux autres de manière comparable aux cylindres d'un moteur à combustion interne à plat,
* un arrangement de boîte de vitesses étant présent, lequel possède un premier et un deuxième élément d'entraînement ainsi qu'un élément de prise de force,
* l'au moins une première machine électrique étant disposée sur un premier côté de l'arrangement de boîte de vitesses et pouvant être accouplée ou étant accouplée en transmission de couple avec le premier élément d'entraînement, et
* l'au moins une deuxième machine électrique étant disposée sur un deuxième côté de l'arrangement de boîte de vitesses, opposé au premier côté, et pouvant être accouplée ou étant accouplée en transmission de couple avec le deuxième élément d'entraînement,
**caractérisé en ce que**
* l'arrangement de boîte de vitesses est conçu de telle sorte que lors d'une transmission de couple qui entraîne l'élément de prise de force, les deux éléments d'entraînement tournent dans des directions mutuellement opposées,
* il existe un accumulateur d'énergie électrique qui est disposé au-dessous ou au-dessus de l'arrangement de boîte de vitesses,
* l'arrangement de boîte de vitesses étant fixé par bride directement à un boîtier de l'accumulateur d'énergie électrique.

2. Groupe propulseur électrique selon la revendication 1, **caractérisé en ce que** les au moins deux machines électriques dépassent de l'arrangement de boîte de vitesses sur des côtés mutuellement opposés de celui-ci.

3. Groupe propulseur électrique selon l'une des revendications 1 à 2, **caractérisé en ce que** la première et la deuxième machine électrique possèdent respectivement un arbre de moteur et sont disposées de telle sorte que les arbres de moteur sont exactement ou sensiblement coaxiaux l'un par rapport à l'autre.

4. Groupe propulseur électrique selon l'une des revendications 1 à 3, **caractérisé en ce qu'**au moins l'une des machines électriques peut être accouplée ou est accouplée avec l'élément d'entraînement associé par le biais d'une roue libre.

5. Groupe propulseur électrique selon l'une des revendications 1 à 4, **caractérisé en ce qu'**au moins deux machines électriques sont disposées sur le premier côté et/ou sur le deuxième côté de l'arrangement de boîte de vitesses, lesquelles sont accouplées ensemble par le biais d'un dispositif d'accouplement et avec le premier ou le deuxième élément d'entraînement associé.

6. Groupe propulseur électrique selon la revendication 5, **caractérisé en ce que** le dispositif d'accouplement est formé par une transmission à moyen de traction.

7. Groupe propulseur électrique selon l'une des revendications 1 à 6, **caractérisé en ce que** chacune des deux machines électriques est refroidie par air, des ailettes de refroidissement étant associées à chacune des machines électriques.

8. Groupe propulseur électrique selon l'une des revendications 1 à 6, **caractérisé en ce que** les machines électriques sont raccordées à un circuit de refroidissement à liquide.

9. Groupe propulseur électrique selon l'une des revendications 1 à 8, **caractérisé en ce que** le premier élément d'entraînement est accouplé par le biais d'une première démultiplication à l'élément de prise de force et le deuxième élément d'entraînement est accouplé par le biais d'une deuxième démultiplication, différente de la première démultiplication, à l'élément de prise de force.

10. Groupe propulseur électrique selon la revendication 9, **caractérisé en ce que** la première et/ou la deuxième démultiplication sont formées par un dispositif de démultiplication à rapport modifiable.

11. Groupe propulseur électrique selon la revendication 9, **caractérisé en ce que** la première et/ou la deuxième démultiplication sont formées par un dispositif de démultiplication à rapport non modifiable.

12. Groupe propulseur électrique selon l'une des revendications 1 à 11, **caractérisé en ce qu'**au moins l'une des machines électriques fonctionne avec une tension de service qui est inférieure ou au maximum égale à 60 volts.

13. Groupe propulseur électrique selon l'une des revendications 1 à 11, **caractérisé en ce qu'**au moins l'une des machines électriques fonctionne avec une tension de service maximale qui est supérieure à 60 volts.

14. Groupe propulseur électrique selon l'une des revendications 1 à 13, **caractérisé en ce que** la puissance maximale de chacune des machines électriques est inférieure à 25 kW, notamment inférieure à 20 kW.

15. Véhicule, équipé d'un groupe propulseur électrique selon l'une des revendications 1 à 14.

16. Véhicule selon la revendication 15, **caractérisé en ce que** le véhicule est un deux-roues.

17. Véhicule selon la revendication 16, **caractérisé en ce que** le groupe propulseur électrique est installé sur le deux-roues de telle sorte que les machines électriques dépassent à gauche ou à droite du deux-roues.
